(19) **Europäisches Patentamt**
**European Patent Office**
**Office européen des brevets**

(11) **EP 1 971 049 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(51) Int Cl.:
*H04B 10/00* (2006.01)       *H04J 14/02* (2006.01)
*G06F 13/14* (2006.01)

(21) Anmeldenummer: **07005144.6**

(22) Anmeldetag: **13.03.2007**

(54) **Schnittstellenbaustein und Verfahren zu dessem Betrieb**

Interface module and method for its operation

Interface et son procédé de fonctionnement

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**17.09.2008 Patentblatt 2008/38**

(73) Patentinhaber: **LUCEO Technologies GmbH**
**13507 Berlin (DE)**

(72) Erfinder:
• **Schneider, Jens**
**12524 Berlin (DE)**
• **Mannshardt, Stephan**
**14641 Teufelshof (DE)**
• **Stemmer, Thomas**
**14532 Stahnsdorf (DE)**

(74) Vertreter: **Fischer, Uwe**
**Patentanwalt**
**Moritzstraße 22**
**13597 Berlin (DE)**

(56) Entgegenhaltungen:
**WO-A-01/52454      WO-A-01/80025**
**US-B2- 6 950 610**

**Beschreibung**

Die Erfindung bezieht sich auf einen Schnittstellenbaustein mit den Merkmalen gemäß dem Oberbegriff des Anspruchs 1.

Der sogenannte Universal Serial Bus - hier kurz USB genannt - ist ein elektrisches Interface für Personal Computer (PC) zur Anbindung von Endgeräten wie Tastatur, Maus, Kamera, Drucker, etc. und auf der Internetseite www.USB.org näher spezifiziert. In der derzeitigen Spezifikation ist USB 2.0 auf 5m beschränkt, was eine erhebliche Einschränkung für diverse Anwendungen darstellt.

Ein Schnittstellenbaustein, der zum Anschluss an eine elektrische USB-Leitung geeignet ist, ist beispielsweise aus der internationalen Patentanmeldung WO01/52454 bekannt. Dieser vorbekannte Schnittstellenbaustein umfasst eine elektrooptische Sende-/Empfangseinrichtung, die konfiguriert ist, um Signale zwischen einem elektronischen System und einem optischen System zu übertragen. Sie umfasst u.a. folgende Komponenten: eine Host-Schnittstelle zum Verbinden der Sende-/Empfangseinrichtung mit dem elektronischen System, ein Antriebssteuergerät, einen Testsystemschalter TSS, einen Laser und einen Photodetektor, der einen optischen Eingang, der an das optische System gekoppelt ist, und einen Ausgang, der an den primären Signaleingang des TSS gekoppelt ist, aufweist.

Elektrische Bussysteme, wie der USB-Bus, die eine mehrstufige Logik mit mehr als 2 logischen Zuständen verwenden, lassen sich nicht ohne weiteres über optische Übertragungsmedien übertragen. USB muss neben der reinen Datenübertragung nämlich noch weitere Zustände der gegenüberliegenden Seite signalisieren, wie z.B.

- das Endgerät ist angeschlossen und aktiv
- gewählte Übertragungsgeschwindigkeit
- Senden oder Empfangen
- Senden oder Pause

Bei der USB Übertragung werden Daten über ein sogenanntes differentielles Leitungspaar D+ und D- übertragen, wobei logisch "0" bedeutet: D+ = 0 und D- = 1, und logisch "1" bedeutet: D+ = 1 und D- = 0. Darüber hinaus gibt es noch die Zustände D+ ist 0 und D- ist 0, d.h. beide Leitungen sind entweder logisch '0' oder logisch '1'. Diese Signalzustände treten nicht statisch, sondern bitweise auf z.B. in 2Bit-Längen als End of Packet (EOP) Signal bei Full-Speed Verbindungen oder als "Idle" bei High-Speed-Verbindungen.

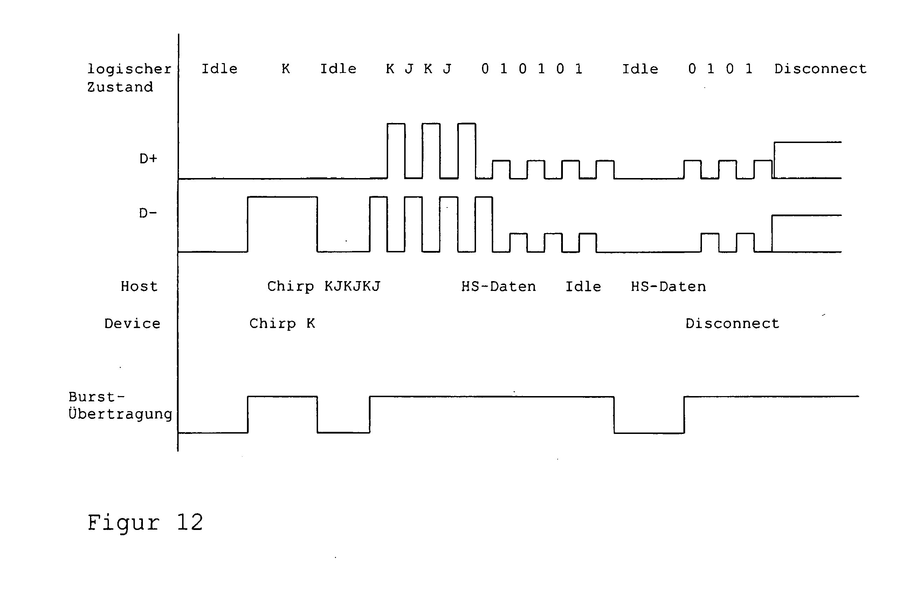

Ein Verbindungsaufbau bei USB durchläuft dabei mehrere Betriebszustände, die in Kombination aus Zeit und Amplitude kodiert sind. Da die Zeitinformation bei der optischen Übertragung erhalten bleibt, kann diese im Prinzip unberücksichtigt bleiben. In der Figur 12 sind beispielhaft logische Zustände und Betriebszustände für eine High-Speed-Verbindung von der Verbindungsaufnahme bis zur Beendigung gezeigt.

In der folgenden Tabelle sind alle logischen Zustände beschrieben, die für eine vollständige Signalisierung aller USB-Betriebszustände (USB1.x und USB2.0) von Bedeutung sind:

| 0 | Daten logisch 0 |
|---|---|
| 1 | Daten logisch 1 |
| J | Chirp J |
| K | Chirp K |
| Disconnect | Das Endgerät ist abgezogen |
| Idle | Keine Datenübertragung aber verbunden |

Die elektrischen Eigenschaften sind im USB2.0 Standard ausführlich beschrieben.

Ein USB-Schnittstellenbaustein der eingangs angegebenen Art ist aus der US-Patentschrift US 6,950,610 bekannt. Dieser Schnittstellenbaustein weist eine elektrische Schnittstelle zum Anschluss an eine elektrische USB-Leitung und eine optische Schnittstelle zum Anschluss an zwei optische Wellenleiter auf. Eine Umwandlungseinrichtung dient dazu, an der elektrischen Schnittstelle anliegende D$^+$- und D$^-$-Signale als optische Signale an der optischen Schnittstelle auszugeben und an der optischen Schnittstelle anliegende optische Signale an der elektrischen Schnittstelle als D$^+$- und D$^-$-Signale auszugeben. Bei dem vorbekannten Schnittstellenbaustein werden die D$^+$- und D$^-$-Signale mittels einer logischen Schaltung durch eine Umkodierung in einen ternären Kode unter Bildung eines binär und analog kodierten Signals verknüpft und es wird das Verknüpfungsergebnis optisch übertragen. Die Signalamplitude des optischen Signals spielt bei der vorbekannten Schnittstelle somit eine wesentliche Rolle. Der vorbekannte Schnittstellenbaustein ist zwar für eine USB1.0-Übertragung geeignet, eine Anpassung an USB2.0 ist jedoch nicht ohne weiteres möglich, weil USB2.0 unter anderem einen Wechsel der Amplitude für die Umschaltung der Datenrate durchführt und die Amplitudeninformation bereits dazu genutzt wird, sogenannte IDLE-Blöcke zu signalisieren. Man könnte zwar weitere Amplitudenwerte definieren, um die zusätzlichen Betriebszustände des USB2.0 Standards zu signalisieren, allerdings wird es schwierig die vielen Amplituden fehlerfrei auf der gegenüber liegenden Empfangsseite zu erkennen, weil mit sich alle Amplituden ändern würden, wenn z.B. eine größere Dämpfung auf der optischen Faserstrecke auftritt.

Der Erfindung liegt die Aufgabe zugrunde, einen Schnittstellenbaustein anzugeben, der eine sichere Datenübertragung auch bei höheren Datenraten ermöglicht und von seinem prinzipiellen Aufbau her beispielsweise auch für den USB2.0-Standard geeignet ist.

Diese Aufgabe wird erfindungsgemäß durch die Merkmale des Anspruchs 1 gelöst. Vorteilhafte Ausgestaltungen der Erfindung sind in Unteransprüchen angegeben.

Danach ist erfindungsgemäß vorgesehen, dass die Umwandlungseinrichtung eine Auswerteinrichtung aufweist, die in den D$^+$-und D$^-$-Signalen enthaltene Steuersignale (USB-Statussignale) und das Nutzsignal (USB-Nutzdatensignal) voneinander trennt, dass der Auswerteinrichtung eine Aufbereitungseinrichtung nachgeordnet ist, die mit dem Nutzsignal und einzelnen oder allen der Steuersignale zumindest zwei elektrische Ansteuersignale für nachgeordete Sendeeinrichtungen erzeugt, und dass die nachgeordneten Sendeeinrichtungen mit den zumindest zwei elektrischen Ansteuersignalen zumindest zwei optische Signale mit zumindest zwei unterschiedlichen Wellenlängenkanälen erzeugen und an der optischen Schnittstelle ausgeben.

Ein wesentlicher Vorteil des erfindungsgemäßen Schnittstellenbausteins ist darin zu sehen, dass aufgrund der erfindungsgemäß vorgesehenen inhaltlichen Voranalyse der D$^+$- und D$^-$-Signale und der erfindungsgemäß vorgesehenen Auftrennung der D$^+$- und D$^-$-Signale in USB-Steuer- und USB-Nutzsignale sowie aufgrund der erfindungsgemäß vorgesehenenen Übertragung der Informationen über zumindest zwei optische Wellenlängenkanäle zusätzliche Freiheitsgrade zur Verfügung gestellt werden, die in sehr einfacher Weise eine Datenübertragung auch nach dem USB2.0 Standard ermöglichen. So kann beispielsweise dem Umstand Rechnung getragen werden, dass mit der Migration zu höheren Datenraten bei USB2.0 eine Signalisierung der Übertragungsgeschwindigkeit nötig geworden ist, um eine Kompatibilität zur älteren Gerätegeneration zu gewährleisten. Auch kann berücksichtigt werden, dass es wegen der Blockübertragung bei USB2.0 Leerblöcke gibt, die ähnlich dem EOP bei USB1.0 funktionieren; die Unterscheidung zum EOP erfolgt beispielsweise in Kombination über die Geschwindigkeitsindikation. Darüber hinaus kann sehr einfach berücksichtigt werden, dass USB das jederzeitige Einstecken und Abziehen der Geräte erlaubt, indem eine entsprechende Signalisierung für verbundene (aktive) und nicht verbundene (inaktive) Endgeräte vorgenommen wird.

Vorzugsweise überträgt die Umwandlungseinrichtung das Nutzsignal auf einem separaten, nutzsignaleignen Wellenlängenkanal. Da die Nutzsignale - im Unterschied zu den niedrig-bitratigen bzw. zeitlich langsam veränderlichen Steuersignalen - hochbitratig bzw. zeitlich schnell veränderlich sind, werden die optischen Signale für die Nutzsignale vorzugsweise mit einem Laser erzeugt. Die niedrig-bitratigen bzw. zeitlich langsam veränderlichen Steuersignale werden vorzugsweise mit einer LED erzeugt.

Im Übrigen wird es als vorteilhaft angesehen, wenn die Aufbereitungseinrichtung zumindest zwei der Steuersignale miteinander unter Bildung eines elektrischen Ansteuersignals logisch verknüpft und wenn eine nachgeordnete Sendeeinrichtung mit diesem Ansteuersignal ein optisches Signal mit einem eigenen Wellenlängenkanal erzeugt und an der optischen Schnittstelle ausgibt. Eine solche Verknüpfung ist bei USB2.0-Signalen deshalb vorteilhaft, weil einige der USB-Steuersignale inhaltlich redundant sind und deshalb nicht oder nur verknüpft übertragen werden müssen.

Auch kann der Schnittstellenbaustein beispielsweise derart ausgestaltet sein, dass die Aufbereitungseinrichtung zumindest eines der Steuersignale mit dem Nutzsignal unter Bildung eines elektrischen Ansteuersignals logisch verknüpft und dass eine nachgeordnete Sendeeinrichtung mit diesem Ansteuersignal ein optisches Signal mit einem eigenen Wellenlängenkanal erzeugt und an der optischen Schnittstelle ausgibt. Eine solche Verknüpfung mit den Nutzsignalen bietet sich beispielsweise zur Übertragung von sehr niedrig-bitratigen Steuersignalen an, die die Übertragung der Nutzsignale nicht stören oder verlangsamen.

Die Wellenlängenkanäle können unterschiedliche Frequenzbereiche umfassen. Alternativ können sich die Wellenlängenbereiche der Wellenlängenkanäle auch überschneiden, beispielsweise, wenn sie unterschiedliche spektrale Kanalbreiten aufweisen.

Vorzugsweise sendet der Schnittstellenbaustein ausschließlich binär kodiert, damit auf eine mehrstufige analoge Übertragung wie bei dem eingangs erwähnten vorbekannten Schnittstellenbaustein verzichtet werden kann; eine mehrstufige analoge Übertragung hat nämlich den Nachteil, dass der absolute Signalpegel am Empfänger bekannt sein muss, um die Daten auswerten zu können. Dieser kann sich jedoch mit unterschiedlicher Dämpfung ändern, die bei Verwendung unterschiedlicher Faserkabellängen, starker Biegung, z.B. bei Plastikfasern, oder unterschiedlicher Qualität der optischen Steckverbindung schwanken kann. Da sich dann die absoluten Pegel verschieben können, muss eine mehrstufige Übertragung nicht immer fehlerfrei sein.

Auch wird es als vorteilhaft angesehen, wenn die Umwandlungseinrichtung eine Aufbereitungseinrichtung aufweist, die geeignet ist, zumindest zwei optische Wellenlängenkanäle an der optischen Schnittstelle gleichzeitig zu empfangen und aus den zumindest zwei optischen Wellenlängenkanälen ein Nutzsignal und Steuersignale zu gewinnen, und dass mit der Aufbereitungseinrichtung eine Auswerteinrichtung verbunden ist, die mit den Steuersignalen und dem Nutzsignal die D$^+$- und D$^-$-Signale zur Ausgabe an der elektrischen Schnittstelle erzeugt.

Als Erfindung wird außerdem ein Verfahren zum Übertragen eines USB-kompatiblen Signals angesehen, bei dem D$^+$- und D$^-$-Signale nach einer elektro-optischen Wandlung als optische Signale über zumindest einen optischen Wellenleiter übertragen werden.

Der Erfindung liegt diesbezüglich die Aufgabe zugrunde, ein Verfahren anzugeben, dass eine sichere Datenübertragung auch bei höheren Datenraten ermöglicht und von seinem prinzipiellen Ablauf her beispielsweise auch für USB2.0 geeignet ist.

Erfindungsgemäß ist vorgesehen, dass aus den elektrischen D$^+$-und D$^-$-Signalen Steuersignale und ein Nutzsignal abgeleitet werden und diese auf zumindest zwei optischen Wellenlängenkanälen über den zumindest einen optischen Wellenleiter übertragen werden.

Bezüglich der Vorteile des Verfahrens und bezüglich vorteilhafter Ausgestaltungen des Verfahrens sei auf die obigen Ausführungen im Zusammenhang mit dem erfindungsgemäßen Schnittstellenbaustein verwiesen.

Die Erfindung wird nachfolgend anhand von Ausführungsbeispielen näher erläutert; dabei zeigen beispielhaft

Figur 1      eine Anordnung mit zwei elektrischen Geräten, die mittels einer USB-Verbindung miteinander verbunden sind, wobei zwei USB-Schnittstellenbausteine eine elektrooptische Umwandlung auf der Verbindungsstrecke vornehmen;

Figur 2      ein erstes Ausführungsbeispiel für einen erfindungsgemäßen USB-Schnittstellenbaustein, bei dem das USB-Nutzsignal und USB-Statussignale in zwei unterschiedlichen Wellenlängenkanälen übertragen werden;

Figur 3      ein zweites Ausführungsbeispiel für einen erfindungsgemäßen USB-Schnittstellenbaustein, bei dem das USB-Nutzsignal auf einem Wellenlängenkanal und USB-Statussignale miteinander verknüpft auf zwei anderen Wellenlängenkanälen übertragen werden;

Figur 4      ein drittes Ausführungsbeispiel für einen erfindungsgemäßen USB-Schnittstellenbaustein, bei dem das USB-Nutzsignal und USB-Statussignale miteinander verknüpft auf zwei Wellenlängenkanälen übertragen werden;

Figur 5      eine Schaltung für eine Aufbereitungsschaltung des USB-Schnittstellenbausteins gemäß der Figur 4;

Figur 6      ein viertes Ausführungsbeispiel für einen erfindungsgemäßen USB-Schnittstellenbaustein, bei dem das USB-Nutzsignal und USB-Statussignale miteinander verknüpft und digitale Codefolgen übertragen werden;

Figur 7      eine Schaltung für eine Aufbreitungsschaltung des USB-Schnittstellenbausteins gemäß der Figur 6;

Figur 8      eine weitere Schaltung für eine Aufbereitungsschaltung des USB-Schnittstellenbausteins gemäß der Figur 6;

Figur 9      ein fünftes Ausführungsbeispiel für einen erfindungsgemäßen USB-Schnittstellenbaustein, bei dem das USB-Nutzsignal und USB-Statussignale miteinander verknüpft und analog-digital kodiert auf zwei Wellenlängenkanälen übertragen werden;

Figur 10      eine Schaltung für eine Aufbreitungsschaltung des USB-Schnittstellenbausteins gemäß der Figur 9;

Figuren 11a, 11b      optische Wellenlängenkanäle und Filter zum Filtern der optischen Signale;

Figur 12      beispielhaft logische Zustände und Betriebszustände für eine High-Speed-Verbindung nach dem USB-Standard von der Verbindungsaufnahme bis zur Beendigung; und

Figuren 13a, 13b      weitere optische Wellenlängenkanäle und Filter zum Filtern der optischen Signale.

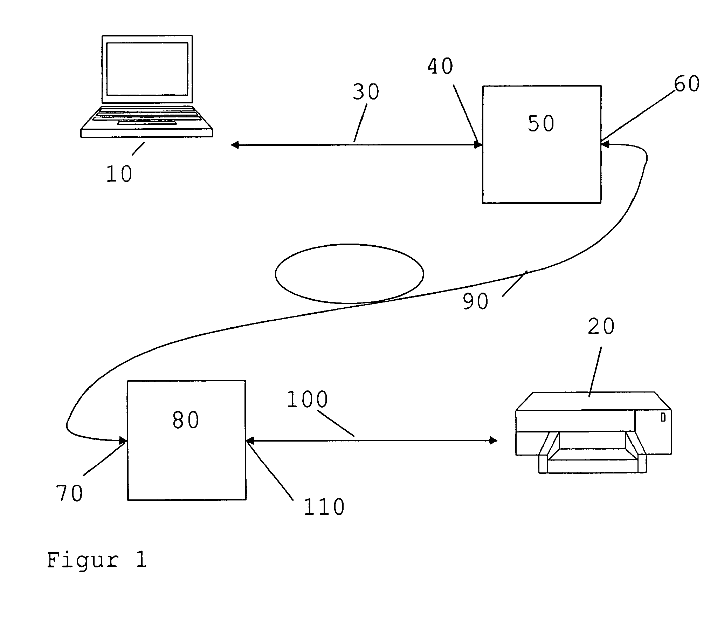

In den Figuren 1 bis 13b werden aus Gründen der Übersicht für vergleichbare oder identische Komponenten dieselben Bezugszeichen verwendet.

In der Figur 1 erkennt man eine Anordnung mit zwei elektrischen Geräten 10 und 20, die miteinander kommunizieren. Bei dem Gerät 10 kann es sich beispielsweise um einen Computer und bei dem Gerät 20 um einen Drucker handeln.

Das Gerät 10 steht über ein USB-Kabel 30 nach dem USB2.0-Standard mit einer elektrischen Schnittstelle 40 eines ersten Schnittstellenbausteins 50 in Verbindung. Der erste Schnittstellenbaustein 50 ist über eine optische Schnittstelle 60 außerdem an eine optische Schnittstelle 70 eines zweiten Schnittstellenbausteins 80 angeschlossen, und zwar über eine optische Verbindung 90. Die optische Verbindung 90 kann durch einen einzigen Lichtwellenleiter oder auch durch mehrere Lichtwellenleiter gebildet sein. Über ein zweites USB-Kabel 100 ist das Gerät 20 an eine elektrische Schnittstelle 110 des zweiten Schnittstellenbausteins 80 angeschlossen.

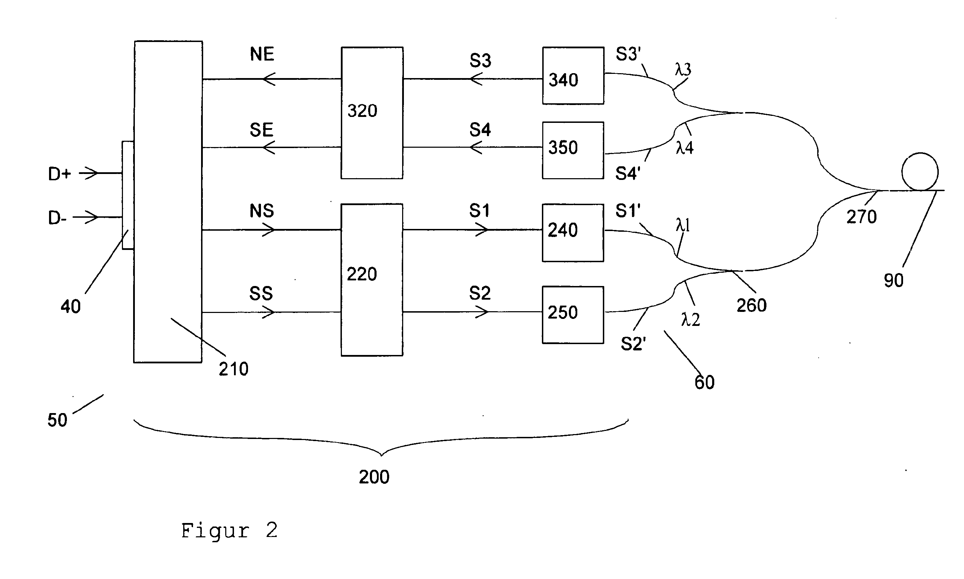

In der Figur 2 ist ein erstes Ausführungsbeispiel für den ersten Schnittstellenbaustein 50 näher gezeigt. Der zweite Schnittstellenbaustein 80 kann prinzipiell identisch oder zumindest in analoger Weise aufgebaut sein.

Man erkennt in der Figur 2 die elektrische Schnittstelle 40, an der ein $D^+$- und ein $D^-$-Signal des Geräts 10 anliegen. Mit der elektrischen Schnittstelle 40 steht eine Umwandlungseinrichtung 200 mit einer Auswerteinrichtung 210 in Verbindung, die die $D^+$- und $D^-$-Signale auswertet und ausgangsseitig ein optisch zu sendendes Signal "HS Differential_ Receiver_Output" - nachfolgend USB-Nutzsignal NS genannt - und optisch zu sendende Steuersignale (USB-Statussignale) SS erzeugt. Die Auswerteinrichtung 210 kann, beispielsweise mit Hilfe der USB2.0-Chips USB1T1102 der Firma Fairchild und dem Chip CY7C68000 der Firma Cypress gebildet sein oder solche umfassen.

Bei den Steuersignalen SS kann es sich beispielsweise um einzelne oder alle der nachfolgend aufgeführten, nach dem USB2.0-Standard definierten Signale handeln:

- "Rpu Enable"
- "HS_Current_Source_Enable"
- "HS_Drive_Enable"
- "HS_Data_Driver_Input"
- "LS/FS_Data_Driver_Input"
- "Assert_Single_Ended_Zero"
- "FS_Edge_Mode_Sel"
- "LS/FS_Driver_Output_Enable"
- "Squelch"
- "LS/FS_Differential_Receiver_Output"
- "HS_Disconnect"
- "SE_Data+_Receiver_Output"
- "SE_Data-_Receiver_Output"

Die Umwandlungseinrichtung 200 umfasst eine Aufbereitungseinrichtung 220, die der Auswerteinrichtung 210 nachgeschaltet ist und der ausgangsseitig zwei optische Sendeeinrichtungen 240 und 250 zugeordnet sind. Die optischen Sendeeinrichtungen 240 und 250 können beispielsweise Laser oder Leuchtdioden enthalten; letztere sind jedoch aus Gründen der Übersicht in der Figur 2 nicht näher gezeigt.

Die Aufgabe der Aufbereitungseinrichtung 220 besteht darin, das optisch zu sendende Nutzsignal NS der Auswerteinrichtung 210 in ein elektrisches Ansteuersignal S1 umzuwandeln, mit dem die optische Sendeeinrichtung 240 das optische Signal S1' mit dem Wellenlängenkanal bzw. der Wellenlänge λ1 erzeugen kann.

In entsprechender Weise besteht die Aufgabe der Aufbereitungseinrichtung 220 darin, einzelne oder alle der Steuersignale SS der Auswerteinrichtung 210 in ein elektrisches Ansteuersignal S2 umzuwandeln, mit dem die optische Sendeeinrichtung 250 das optische Signal S2' mit der Wellenlänge λ2 erzeugen kann. Das Umwandeln der Steuersignale SS der Auswerteinrichtung 210 in das elektrische Ansteuersignal S2 kann beispielsweise durch eine digitale Kodierung und/oder ein zeitliches Multiplexverfahren erfolgen.

Die beiden optischen Signale S1' und S2' werden über Y-Verzweiger 260 und 270 in die optische Verbindung 90 gemäß der Figur 1 eingespeist. Bei der Darstellung gemäß der Figur 2 wird beispielhaft davon ausgegangen, dass die optische Verbindung 90 durch einen einzigen Wellenleiter gebildet wird.

Die Umwandlungseinrichtung 200 umfasst außerdem eine Aufbereitungseinrichtung 320, der eingangsseitig zwei optische Empfangseinrichtungen 340 und 350 vorgeordnet sind. Die optischen Empfangseinrichtungen 340 und 350 können beispielsweise Empfangsdioden enthalten; letztere sind jedoch aus Gründen der Übersicht in der Figur 2 nicht näher gezeigt.

Die Aufgabe der optischen Empfangseinrichtung 340 besteht darin, ein optisches Signal S3' mit der Wellenlänge λ3 zu empfangen und ausgangsseitig ein entsprechendes elektrisches Ansteuersignal S3 zu erzeugen, mit dem die Aufbereitungseinrichtung 320 ein optisch empfangenes und elektrisch an der Schnittstelle 40 zu sendendes Nutzsignal NE bilden kann.

In entsprechender Weise besteht die Aufgabe der optischen Empfangseinrichtung 350 darin, ein optisches Signal S4' mit der Wellenlänge λ4 zu empfangen und ausgangsseitig ein entsprechendes elektrisches Ansteuersignal S4 zu erzeugen, mit dem die Aufbereitungseinrichtung 320 optisch empfangene und elektrisch zu sendende Steuersignale SE bilden kann.

Die der Aufbereitungseinrichtung 320 nachgeordnete Auswerteinrichtung 210 bildet mit den optisch empfangenen und elektrisch zu sendenden Steuersignalen NE und dem optisch empfangenen und elektrisch zu sendenden Nutzsignal NE ausgangsseitig D$^+$- und D$^-$-Signale, die über die elektrische Schnittstelle 40 des ersten Schnittstellenbausteins 50 in das USB-Kabel 30 gemäß der Figur 1 eingespeist werden.

Zusammengefasst werden bei dem Ausführungsbeispiel gemäß der Figur 2 also für die bidirektionale Übertragung eines USB2.0-Signals vier optische Wellenlängen λ1-λ4 verwendet, nämlich

- die Wellenlänge λ1 für die optische Senderichtung zum Senden des optisch zu sendenden Nutzsignals NS ("HS_Differential_Receiver_Output"),
- die Wellenlänge λ2 für die optische Senderichtung zum optischen Senden der Steuersignale SS,
- die Wellenlänge λ3 für die optische Empfangsrichtung und das optische Empfangen des Nutzsignals NE ("HS_Data_Driver_Input" und
- die Wellenlänge λ4 für die optische Empfangsrichtung und das Empfangen der Steuersignale SE.

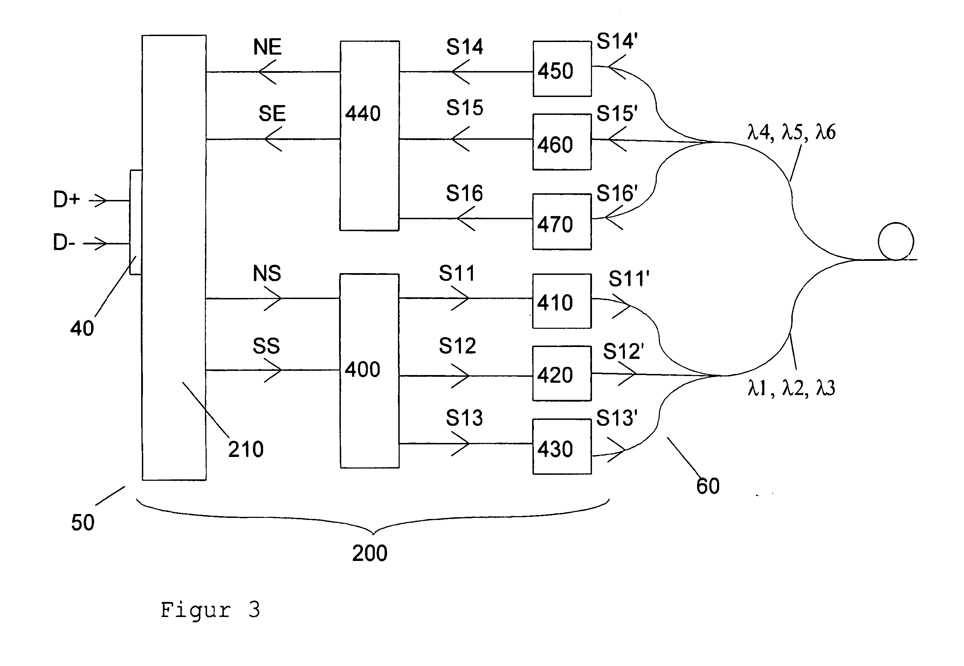

Im Zusammenhang mit der Figur 3 wird nun ein weiteres Ausführungsbeispiel für den ersten Schnittstellenbaustein 50 und damit auch für den zweiten Schnittstellenbaustein 80 näher erläutert. Bei dem Ausführungsbeispiel gemäß der Figur 3 werden in Senderichtung und in Empfangsrichtung jeweils drei Wellenlängen eingesetzt.

Man erkennt in der Figur 3 die elektrische Schnittstelle 40, an der elektrische D$^+$- und D$^-$-Signale des Geräts 10 anliegen. Mit der elektrischen Schnittstelle 40 steht eine Umwandlungseinrichtung 200 mit einer Auswerteinrichtung 210 in Verbindung, die die D$^+$- und D$^-$-Signale auswertet und ausgangsseitig das Signal "HS_Differential_Receiver_Output" - nachfolgend Nutzsignal NS genannt - und Steuersignale SS erzeugt.

Die Umwandlungseinrichtung 200 umfasst außerdem eine sendeseitige Aufbereitungseinrichtung 400, die der Auswerteinrichtung 210 nachgeschaltet ist und der ausgangsseitig drei optische Sendeeinrichtungen 410, 420 und 430 zugeordnet sind. Die optischen Sendeeinrichtungen können beispielsweise Laser oder Leuchtdioden enthalten.

Die Aufgabe der Aufbereitungseinrichtung 400 besteht darin, mit dem Nutzsignal NS und den Steuersignalen SS der Auswerteinrichtung 210 drei elektrische Ansteuersignale S11, S12 und S13 zu bilden, beispielsweise gemäß:

S11 = HS_Differential_Receiver_Output

S12 = ((SE_Data+_Receiver_Output)OR
(SE_Data-_Receiver_Output)) AND NOT(Squelch)

S13 = NOT (HS_Differential_Receiver) AND NOT(HS_Disconnect)

Die folgende Tabelle zeigt das Kodierungsschema in einer anderen Darstellung mit den jeweiligen USB-Signalisierungszuständen:

| Kodiertabelle für das Senden vom Gerät 10 zum Gerät 20 (Signalzustände gemäß USB2.0-Standard) | S11 | S12 | S13 |
|---|---|---|---|
| Disconnect | 0 | 0 | 0 |
| Idle | 0 | 0 | 1 |
| Idle | 1 | 0 | 1 |
| K | 0 | 1 | 1 |
| J | 1 | 1 | 1 |
| 0 | 0 | 1 | 0 |
| 1 | 1 | 1 | 0 |

Die drei optischen Sendeeinrichtungen 410, 420 und 430 erzeugen mit den drei elektrischen Ansteuersignale S11, S12 und S13 optische Signale S11', S12' und S13' mit den Wellenlängen λ1, λ2, und λ3 und koppeln diese in die optische Verbindung 90 ein. Falls die elektrische Verbindung an der Schnittstelle 40 unterbrochen ist, wird kein Licht gesendet. Das hat den Vorteil, dass auch die optische Verbindung unterbrochen werden kann, ohne dass die Schnittstellenbausteine 50 oder 80 vom Gerät abgezogen werden müssen.

Die Umwandlungseinrichtung 200 umfasst außerdem eine empfangsseitige Aufbereitungseinrichtung 440, der eingangsseitig drei optische Empfangseinrichtungen 450, 460 und 470 vorgeordnet sind. Die drei optischen Empfangseinrichtungen 450, 460 und 470 empfangen optische Signale S14', S15' und S16' mit den Wellenlängen $\lambda4$, $\lambda5$ und $\lambda6$ und erzeugen ausgangsseitig entsprechende elektrisches Ansteuersignale S14, S15 und S16, mit denen die Aufbereitungseinrichtung 440 ein optisch empfangenes und elektrisch an der Schnittstelle 40 zu sendendes Nutzsignal NE und optisch empfangene und elektrisch an der Schnittstelle 40 zu sende Steuersignale SE bilden kann.

Als Steuersignale SE können beispielsweise gebildet werden:

Rpu_Enable = S12 AND S13

HS_Current_Source_Enable = S12 AND NOT(S13)AND S11

HS_Drive_Enable = S12 AND NOT(S13)

HS_Data_Driver_Input = S11

LS/FS_Data_Driver_Input = S11

Assert_Single_Ended_Zero = NOT(S12) AND S13

FS_Edge_Mode_Sel = S12 AND S13

LS/FS_Driver_Output_Enable = S12 AND S13

Die folgende Tabelle zeigt das Dekodierungsschema in einer anderen Darstellung mit den jeweiligen USB-Signalisierungszuständen:

| S14 | S15 | S16 | Dekodiertabelle für das optische Empfangen vom Gerät 20 und das elektrische Senden zum Gerät 10 (Signalzustände gemäß USB2.0-Standard) |
|---|---|---|---|
| 0 | 0 | 0 | Disconnect |
| 0 | 0 | 1 | Idle |
| 1 | 0 | 1 | Idle |
| 0 | 1 | 1 | K |
| 1 | 1 | 1 | J |
| 0 | 1 | 0 | 0 |
| 1 | 1 | 0 | 1 |

Die optischen Signale mit den Wellenlängen $\lambda1$, $\lambda2$, $\lambda3$, $\lambda4$, $\lambda5$, $\lambda6$ können mit unterschiedlich gearteten Sendeelementen erzeugt werden. Für eine Datenrate von 480Mb/s empfiehlt sich der Einsatz von Laserdioden für die Wellenlängen $\lambda1$ und $\lambda4$, da über diese Wellenlängen die Nutzdaten NS in Form des USB-Signals "HS_Differential_Receiver_Output" übertragen werden. Für die Wellenlängen $\lambda2$, $\lambda3$, $\lambda5$ und $\lambda6$ können auch langsamere LED's zum Einsatz kommen, da die Zustandssignalisierung mittels der Steuersignale S12, S13, S15 und S16 derart kodiert ist, dass sie auch mit einer geringeren Bitrate von beispielsweise 120Mb/s auskommt. Die Verwendung von LED's bietet Kostenvorteile und vereinfacht auch den Einsatz optischer Filter am Empfänger.

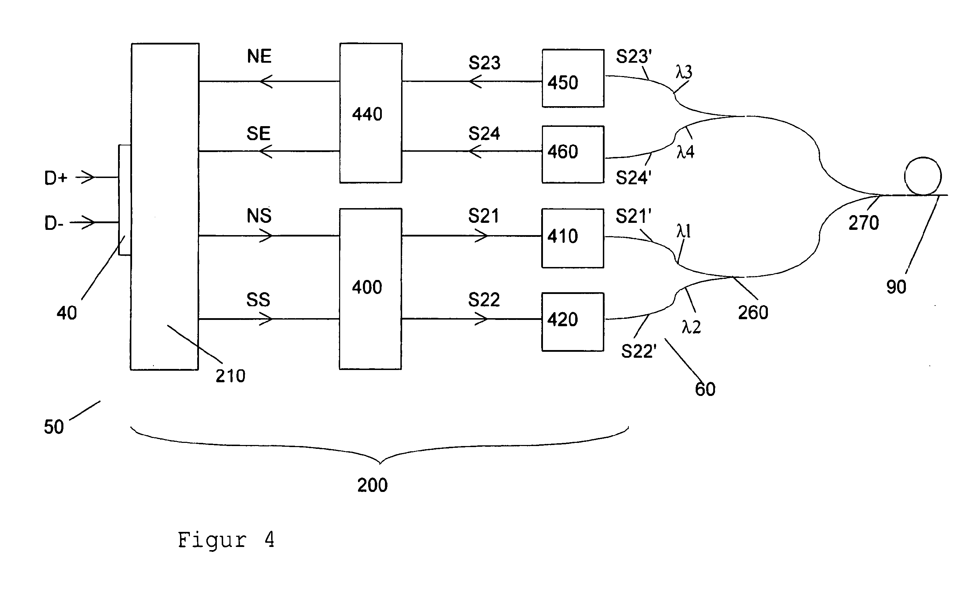

Im Zusammenhang mit der Figur 4 wird nun ein drittes Ausführungsbeispiel für die Schnittstellenbausteine 50 und 80 gemäß der Figur 1 näher erläutert. Bei dem Ausführungsbeispiel gemäß der Figur 4 werden in Senderichtung und in Empfangsrichtung jeweils zwei Wellenlängen eingesetzt.

Man erkennt in der Figur 4 die elektrische Schnittstelle 40, an der elektrische D$^+$- und D$^-$-Signale des Geräts 10 anliegen. Mit der elektrischen Schnittstelle 40 steht eine Umwandlungseinrichtung 200 mit einer Auswerteinrichtung 210 in Verbindung, die die D$^+$- und D$^-$-Signale auswertet und ausgangsseitig das Nutzsignal NS ("HS_Differential_Receiver_Output") sowie Steuersignale SS erzeugt.

Die Umwandlungseinrichtung 200 umfasst außerdem eine sendeseitige Aufbereitungseinrichtung 400, die der Auswerteinrichtung 210 nachgeschaltet ist und der ausgangsseitig zwei optische Sendeeinrichtungen 410 und 420 zugeordnet sind. Die optischen Sendeeinrichtungen können beispielsweise Laser oder Leuchtdioden enthalten.

Die Aufgabe der Aufbereitungseinrichtung 400 besteht darin, mit dem Nutzsignal NS und den Steuersignalen SS der Auswerteinrichtung 210 zwei elektrische Ansteuersignale S21 und S22 zu bilden, beispielsweise gemäß:

S21 = HS_Differential_Receiver_Output OR NOT((SE_Data+_Receiver_Output)OR(SE_Data-_Receiver_Output))

S22 = NOT(Squelch) AND LS/FS_Differential_Receiver_Output) + NOT(HS_Disconnect)

Das logische "+" stellt hier eine Addition der Signalamplituden dar.
Die folgende Tabelle zeigt das Kodierungsschema in einer anderen Darstellung unter Berücksichtigung der USB-Signalisierungszustände:

| Kodiertabelle für das Senden vom Gerät 10 zum Gerät 20 (Signalzustände gemäß USB2.0-Standard) | S22 | S21 |
|---|---|---|
| Disconnect | 0 | 0 |
| Idle | 0 | 1 |
| K | 2 | 0 |
| J | 2 | 1 |
| 0 | 1 | 0 |
| 1 | 1 | 1 |

Die zwei optischen Sendeeinrichtungen 410 und 420 erzeugen mit den zwei elektrischen Ansteuersignalen S21 und S22 optische Signale S21' und S22' mit den Wellenlängen λ1 und λ2 und koppeln diese in die optische Verbindung 90 ein.
Die Umwandlungseinrichtung 200 umfasst außerdem eine empfangsseitige Aufbereitungseinrichtung 440, der eingangsseitig zwei optische Empfangseinrichtungen 450 und 460 vorgeordnet sind. Die zwei optischen Empfangseinrichtungen 450 und 460 empfangen optische Signale S23' und S24' des Geräts 20 mit den Wellenlängen λ3 und λ4 und erzeugen ausgangsseitig entsprechende elektrisches Ansteuersignale S23 und S24, mit denen die Aufbereitungseinrichtung 440 ein optisch empfangenes und elektrisch an der Schnittstelle 40 zu sendendes Nutzsignal NE und optisch empfangene und elektrisch an der Schnittstelle 40 zu sendende Steuersignale SE bilden kann.
Die Steuersignale SE werden beispielsweise gebildet gemäß:

Rpu_Enable = A AND B

HS_Current_Source_Enable = S24 AND A AND NOT(B)

HS_Drive_Enable = A AND NOT(B)

HS_Data_Driver_Input = S24

LS/FS_Data_Driver_Input = S24

Assert_Single_Ended_Zero = NOT(A) AND NOT(B)

FS_Edge_Mode_Sel= A AND B

LS/FS_Driver_Output_Enable= A AND B

wobei die Werte für A und B der folgenden Tabelle entnommen werden, in der gleichzeitig das Dekodierungsschema nochmals in einer anderen Darstellung unter Berücksichtigung der jeweiligen USB-Signalisierungszustände enthalten ist:

| S22 | S21 | A | B | Dekodiertabelle für das optische Empfangen vom Gerät 20 und das elektrische Senden zum Gerät 10 (Signalzustände gemäß USB2.0-Standard) |
|---|---|---|---|---|
| 0 | 0 | 0 | 0 | Disconnect |
| 0 | 1 | 0 | 0 | Idle |

(fortgesetzt)

| S22 | S21 | A | B | Dekodiertabelle für das optische Empfangen vom Gerät 20 und das elektrische Senden zum Gerät 10 (Signalzustände gemäß USB2.0-Standard) |
|-----|-----|---|---|---|
| 2 | 0 | 1 | 1 | K |
| 2 | 1 | 1 | 1 | J |
| 1 | 0 | 1 | 0 | 0 |
| 1 | 1 | 1 | 0 | 1 |

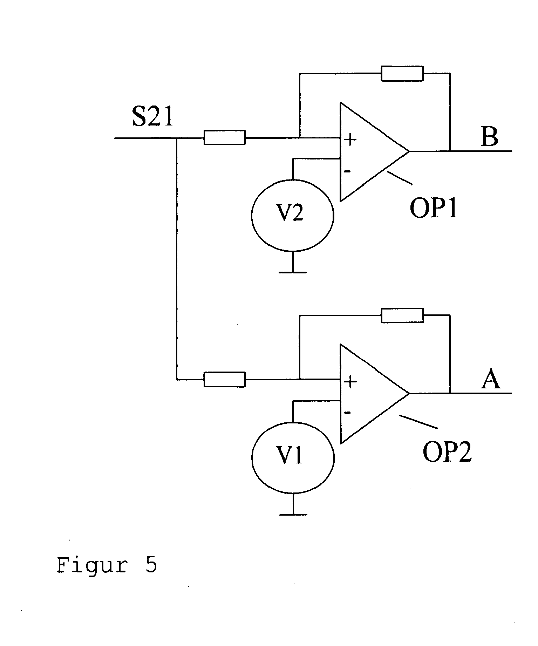

Die Erzeugung der binären Zwischenzustände aus dem ternären Code des Signals S21 zeigt beispielhaft die Figur 5. Man erkennt Operationsverstärker OP1 und OP2, die mit unterschiedlichen Referenzspannungen V1 und V2 beaufschlagt sind. Diese sind so festgelegt, dass sie ein sicheres Schalten der Operationsverstärker erlauben, beispielsweise betragen V1 = 0,5 V und V2 = 1,5 V, wenn die maximale Amplitude des Signals S21 zwei Volt beträgt.

Die Zuordnung der logischen Zwischenzustände zu den Daten kann auch anders erfolgen. Das vorgestellte Codierschema ist jedoch vorteilhaft, das es folgende Eigenschaften erfüllt:

- Die optische Verbindung kann unterbrochen werden, da in diesem Falle korrekt in ein HS_Disconnect kodiert wird, wenn alle Kanäle aus sind, und
- S21 kann durch eine langsame LED erzeugt werden, da nur langsam veränderliche Zustände signalisiert werden müssen.

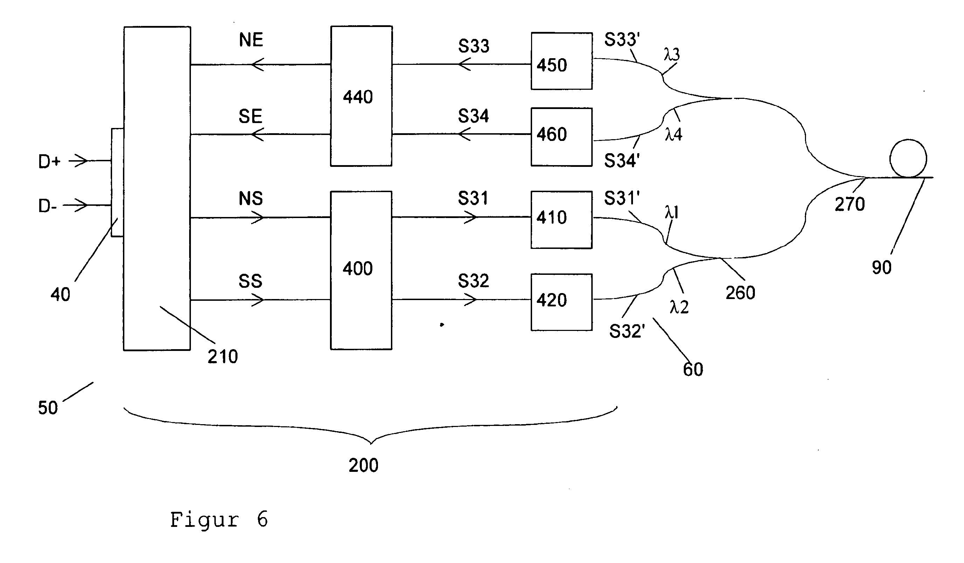

Im Zusammenhang mit der Figur 6 wird nun ein viertes Ausführungsbeispiel für den ersten Schnittstellenbaustein 50 und den zweiten Schnittstellenbaustein 80 gemäß der Figur 1 näher erläutert. Bei dem Ausführungsbeispiel gemäß der Figur 6 werden in Senderichtung und in Empfangsrichtung jeweils zwei Wellenlängen eingesetzt.

Man erkennt in der Figur 6 die elektrische Schnittstelle 40, an der elektrische $D^+$- und $D^-$-Signale des Geräts 10 anliegen. Mit der elektrischen Schnittstelle 40 steht eine Umwandlungseinrichtung 200 mit einer Auswerteinrichtung 210 in Verbindung, die die $D^+$- und $D^-$-Signale auswertet und ausgangsseitig das Signal "HS_Differential_Receiver_Output" als Nutzsignal NS sowie Steuersignale SS erzeugt.

Die Umwandlungseinrichtung 200 umfasst außerdem eine sendeseitige Aufbereitungseinrichtung 400, die der Auswerteinrichtung 210 nachgeschaltet ist und der ausgangsseitig zwei optische Sendeeinrichtungen 410 und 420 zugeordnet sind. Die optischen Sendeeinrichtungen können beispielsweise Laser oder Leuchtdioden enthalten.

Die Aufgabe der Aufbereitungseinrichtung 400 besteht darin, mit dem Nutzsignal NS und den Steuersignalen SS der Auswerteinrichtung 210 zwei elektrische Ansteuersignale S31 und S32 zu bilden. Dabei werden beispielsweise die Logik-Zustände im Zustandssignal SS durch Code-Folgen kodiert. Für das Signal S31 gilt dann beispielsweise:

S31 = HS_Differential_Receiver_Output

Das Signal S32 wird mit Hilfswerten C1 und C2, die gemäß den beiden nachfolgenden Gleichungen gebildet werden, und der nachfolgenden Tabelle erzeugt:

C1= NOT(Squelch) OR NOT(HS_Disconnect)

C2= NOT(Squelch) AND HS_Disconnect

| Code-Folge für S32 | C1 | C2 |
|-----|-----|-----|
| 0000 | 0 | 0 |
| 0101 | 0 | 1 |
| 1111 | 1 | 1 |
| 1111 | 1 | 1 |
| 0011 | 1 | 0 |
| 0011 | 1 | 0 |

Die folgende Tabelle zeigt das Kodierungsschema in einer anderen Darstellung unter Berücksichtigung der jeweiligen USB-Signalisierungszustände:

| Kodiertabelle für das Senden vom Gerät 10 zum Gerät 20 (Signalzustände gemäß USB2.0-Standard) | S31 | Code-Folge für S32 | C1 | C2 |
|---|---|---|---|---|
| Disconnect | 0 | 0000 | 0 | 0 |
| Idle | 0 | 0101 | 0 | 1 |
| K | 0 | 1111 | 1 | 1 |
| J | 1 | 1111 | 1 | 1 |
| 0 | 0 | 0011 | 1 | 0 |
| 1 | 1 | 0011 | 1 | 0 |

Die zwei optischen Sendeeinrichtungen 410 und 420 erzeugen mit den zwei elektrischen Ansteuersignale S31 und S32 optische Signale S31' und S32' mit den Wellenlängen λ1 und λ2 und koppeln diese in die optische Verbindung 90 ein.

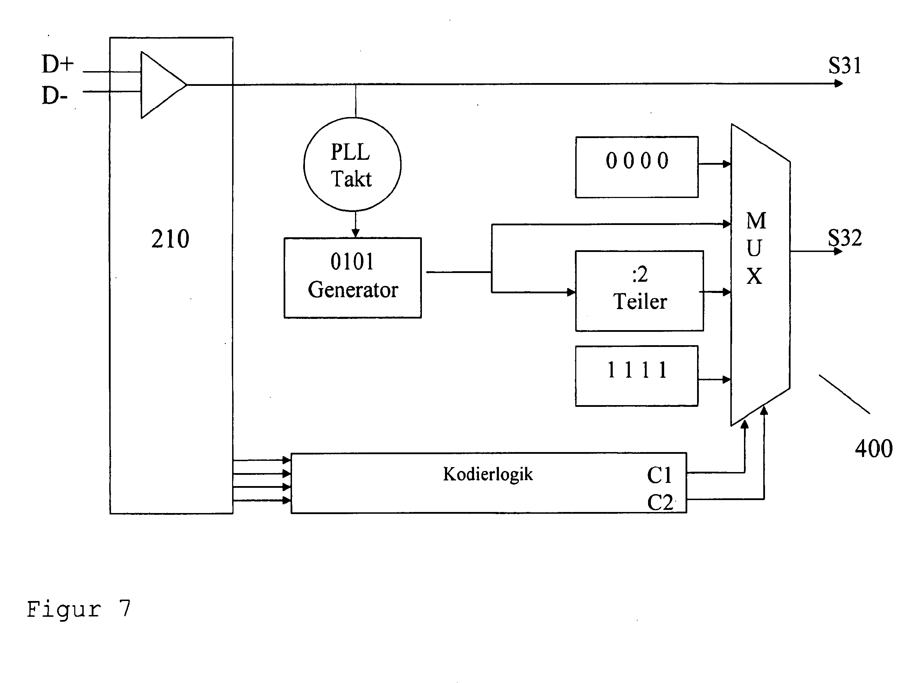

Die Code-Folgen des Ansteuersignals S31 lassen sich in der sendeseitigen Aufbereitungseinrichtung 400 beispielsweise mit einer Schaltung bilden, wie sie in der Figur 7 als Blockschaltbild gezeigt ist.

Die Umwandlungseinrichtung 200 umfasst außerdem eine empfangsseitige Aufbereitungseinrichtung 440, der eingangsseitig zwei optische Empfangseinrichtungen 450 und 460 vorgeordnet sind. Die zwei optischen Empfangseinrichtungen 450 und 460 empfangen optische Signale S33[1] und S34' mit den Wellenlängen λ3 und λ4 und erzeugen ausgangsseitig entsprechende elektrisches Ansteuersignale S33 und S34, mit denen die Aufbereitungseinrichtung 440 ein optisch empfangenes und elektrisch an der Schnittstelle 40 zu sendendes Nutzsignal NE und optisch empfangene und elektrisch an der Schnittstelle 40 zu sende Steuersignale SE bilden kann.

Die Steuersignale SE werden beispielsweise unter Zwischenbildung von Hilfswerten C1, C2 und C3 gebildet gemäß:

| S34 | S33 | C1 | C2 | C3 | Dekodiertabelle für das optische Empfangen vom Gerät 20 und für das elektrische Senden zum Gerät 10 (Signalzustände gemäß USB2.0-Standard) |
|---|---|---|---|---|---|
| 0 | 0000 | 0 | 0 | 1 | Disconnect |
| 0 | 0101 | 1 | 0 | 0 | Idle |
| 0 | 1111 | 0 | 0 | 1 | K |
| 1 | 1111 | 0 | 0 | 1 | J |
| 0 | 0011 | 0 | 1 | 0 | 0 |
| 1 | 0011 | 0 | 1 | 0 | 1 |

Mit den Hilfswerten C1, C2 und C3 werden dann die optisch empfangenen und elektrisch zu sendenden Steuersignale SE gebildet gemäß:

Rpu_Enable = C3

HS_Current_Source_Enable = C1 OR C2

HS_Drive_Enable = C1 OR C2

HS_Data_Driver_Input = S34

LS/FS_Data_Driver_Input = S34

Assert_Single_Ended_Zero = C1

FS_Edge_Mode_Sel = C3

LS/FS_Driver_Output_Enable = C3

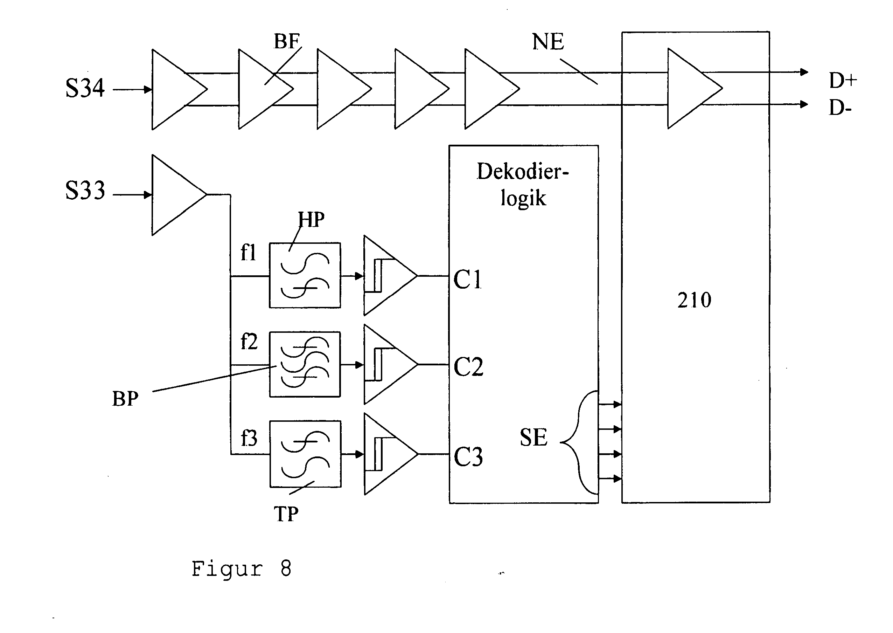

Die Erzeugung der Hilfswerte C1, C2 und C3 aus den Codefolgen des Signals S31 zeigt beispielhaft die Figur 8. Die Filterfrequenz f1 des Hochpasses HP, die Durchlassfrequenz f2 des Bandpasses BP und die Filterfrequenz f3 des Tiefpasses TP werden vorzugsweise zumindest annähernd in Abhängigkeit von der Bitrate B des Nutzsignals NS wie folgt gewählt:

$$f1 \geq B/2 = 240 \text{ MHz (für B = 480 Mbit/s)}$$

$$f2 \approx B/4 = 120 \text{ MHz (für B = 480 Mbit/s)}$$

$$f3 \leq B/4 = 120 \text{ MHz (für B = 480 Mbit/s)}$$

Damit lassen sich die Bitfolge "0101" mit dem Hochpass HP, die Bitfolge "0011" mit dem Bandpass HP und statische Bitfolgen (länger als 4 Bit) mit dem Tiefpass TP erkennen. Die vier Buffer BF sorgen für die nötige Verzögerung von vier Bits, so dass die richtigen Zustände der USB-Sende-Schnittstelle rechtzeitig zur Verfügung stehen.

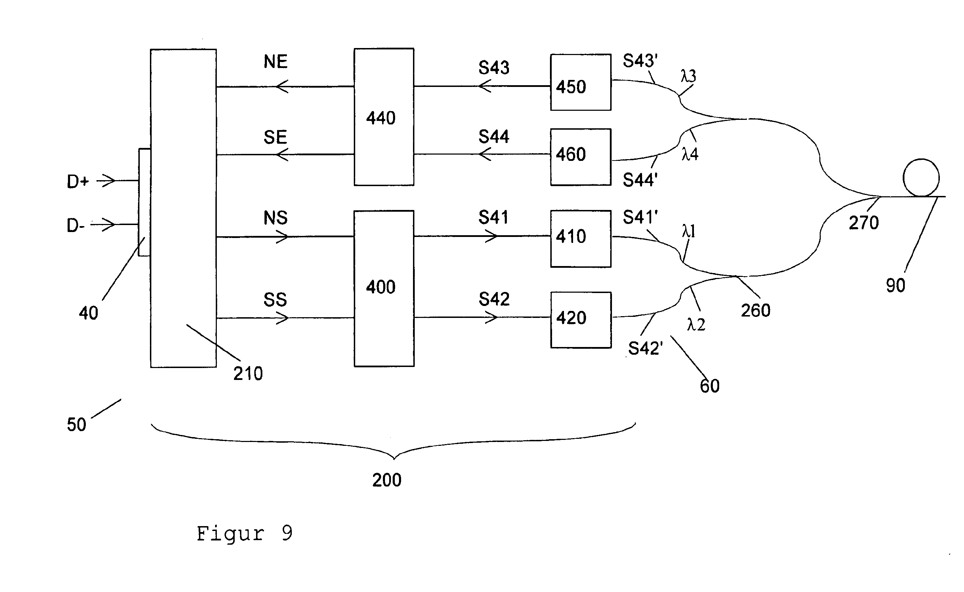

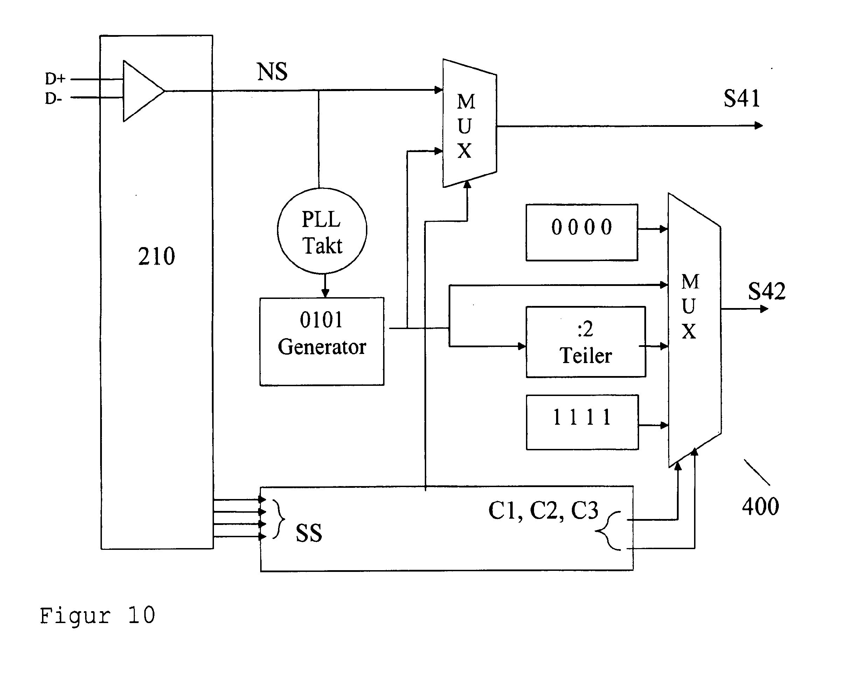

Für viele optische Übertrager stellt die Übertragung sogenannter Burst-Pakete ein Problem dar. Wenn nicht burstfähige optische Sender und Empfänger eingesetzt werden sollen, muss dafür gesorgt werden, dass permanent in Sende- und Empfangsrichtung Wechsel der Amplitude stattfinden. Dies kann beispielsweise durch Erweiterung des Wellenlängenmultiplexverfahrens durch einen getakteten Code-Generator erfolgen. Dabei wird zum Beispiel ein Baustein verwendet, der als PLL (Phase-Lock-Loop) bekannt ist und für eine Frequenz von 480MHz kommerziell verfügbar ist, z.B. der Chip ADF4110 von der Firma Analog Devices. Die Code-Tabelle wird vorzugsweise derart definiert, dass einer High-Speed-USB-Übertragung kein optischer Kanal ohne Wechsel der Amplitude bleibt und dass auch dann, wenn nichts gesendet wird, also Paketlücken auftreten, die Synchronisation zur gegenüberliegenden PLL nicht verloren geht. Ein entsprechendes Ausführungsbeispiel für die Schnittstellenbausteine 50 und 80 zeigen die Figuren 9 und 10.

Bei dem Ausführungsbeispiel gemäß der Figur 9 werden in Senderichtung und in Empfangsrichtung jeweils zwei Wellenlängen eingesetzt. Den Aufbau der sendeseitigen Aufbereitungseinrichtung 400, die der Auswerteinrichtung 210 nachgeschaltet ist und der ausgangsseitig zwei optische Sendeeinrichtungen 410 und 420 zugeordnet sind, ist beispielhaft in der Figur 10 gezeigt.

Die Aufgabe der Aufbereitungseinrichtung 400 besteht darin, mit dem Nutzsignal NS und den Steuersignalen SS der Auswerteinrichtung 210 zwei elektrische Ansteuersignale S41 und S42 zu bilden. Dabei werden beispielsweise die Logik-Zustände im Zustandssignal S41 durch Code-Folgen kodiert.

Das Signal S42 wird mittels Multiplexer (MUX) und dem Hilfewert C3 gebildet:

| S41 | HS Differential Receiver Output | C3 |
|---|---|---|
| 0 | 0 | 0 |
| 1 | 1 | 0 |
| Codefolge 0101 | 0 | 1 |
| Codefolge 0101 | 1 | 1 |

Das Signal S41 wird mit Hilfswerten C1, C2 und C3 gebildet, und zwar gemäß den nachfolgenden drei Gleichungen und gemäß der nachfolgenden Tabelle:

C1 = NOT(Squelch) OR NOT(HS_Disconnect)

C2 = NOT(Squelch) AND HS_Disconnect

C3 = NOT (SE_Data+_Receiver_Output) AND NOT(SE_Data-_Receiver_Output)

| S41 | Code-Folge für S42 | C1 | C2 | C3 |
|------|------|------|------|------|
| 0 | 0000 | 0 | 0 | 0 |
| 0101 | 0101 | 0 | 1 | 1 |
| 0 | 1111 | 1 | 1 | 0 |
| 1 | 1111 | 1 | 1 | 0 |
| 0 | 0011 | 1 | 0 | 0 |
| 1 | 0011 | 1 | 0 | 0 |

Die nachfolgende Tabelle zeigt das Kodierungsschema in einer anderen Darstellung unter Berücksichtigung der jeweiligen USB-Signalisierungszustände:

| Kodiertabelle für das Senden vom Gerät 10 zum Gerät 20 (Signalzustände gemäß USB2.0-Standard) | S41 | Code-Folge für S42 | C1 | C2 | C3 |
|------|------|------|------|------|------|
| Disconnect | 0 | 0000 | 0 | 0 | 0 |
| Idle | 0101 | 0101 | 0 | 1 | 1 |
| K | 0 | 1111 | 1 | 1 | 0 |
| J | 1 | 1111 | 1 | 1 | 0 |
| 0 | 0 | 0011 | 1 | 0 | 0 |
| 1 | 1 | 0011 | 1 | 0 | 0 |

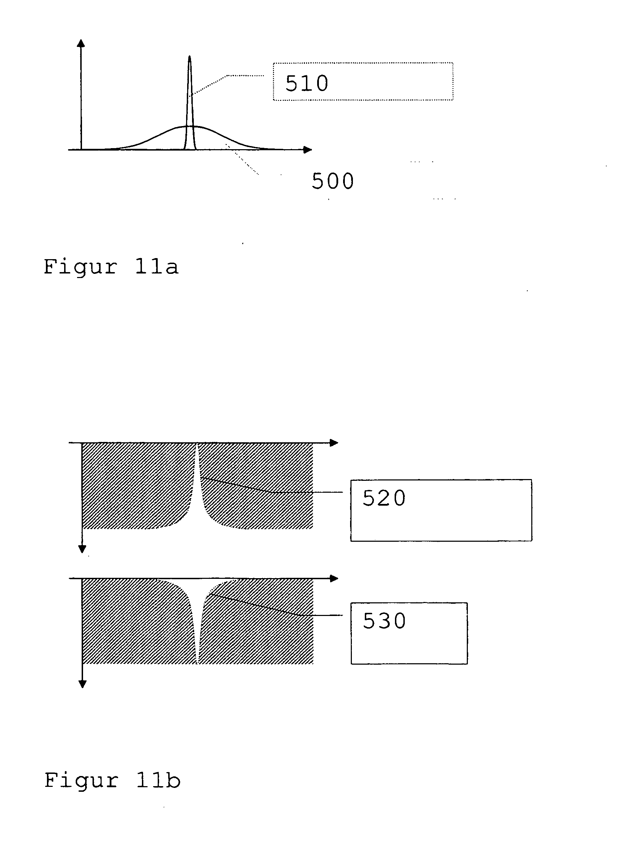

Bei den obigen Ausführungsbeispielen wurde beispielhaft davon ausgegangen, dass die verschiedenen Wellenlängenkanäle unterschiedliche Wellenlängen aufweisen. Alternativ ist es auch möglich, dass sich die optischen Spektren verschiedener Wellenlängenkanäle abschnittsweise oder vollständig überlappen; dies zeigt die Figur 11a anhand eines weiteren Ausführungsbeispiels, bei dem mit einer LED ein Spektrum 500 und mit einem Laser ein anderes Spektrum 510 erzeugt wird, wobei das Spektrum 510 des Lasers innerhalb des Spektrums 500 der LED liegt.

Im Falle überlappender Spektren können die empfängerseitigen optischen Filterfunktionen beispielsweise wie in der Figur 11b dargestellt aussehen. Die Kurve 520 zeigt beispielhaft ein Filterspektrum (Durchlasscharakteristik) zum Herausfiltern der Signale des Lasers bzw. des Spektrums 510 des Lasers, und die Kurve 530 zeigt beispielhaft ein Filterspektrum zum Herausfiltern der Signale der LED bzw. des Spektrums 500 der LED.

Die verschiedenen Wellenlängenkanäle können im Übrigen über eine einzige oder auch über mehrere Lichtwellenleiter übertragen werden. Beispielsweise können zwei Lichtwellenleiter eingesetzt werden, von denen einer für die Senderichtung und einer für die Empfangsrichtung verwendet wird.

Wird für die Senderichtung und für die Empfangsrichtung ein einziger Lichtwellenleiter verwendet, so kann zur Trennung der Sendesignale und der Empfangssignale beispielsweise ein optischer Zirkulator eingesetzt werden, bzw. es können für Sende- und Empfangsrichtung unterschiedliche Wellenlängen verwendet werden, z.B. λ1, λ2, λ3 für Senderichtung und λ4, λ5, λ6 für Empfangsrichtung.

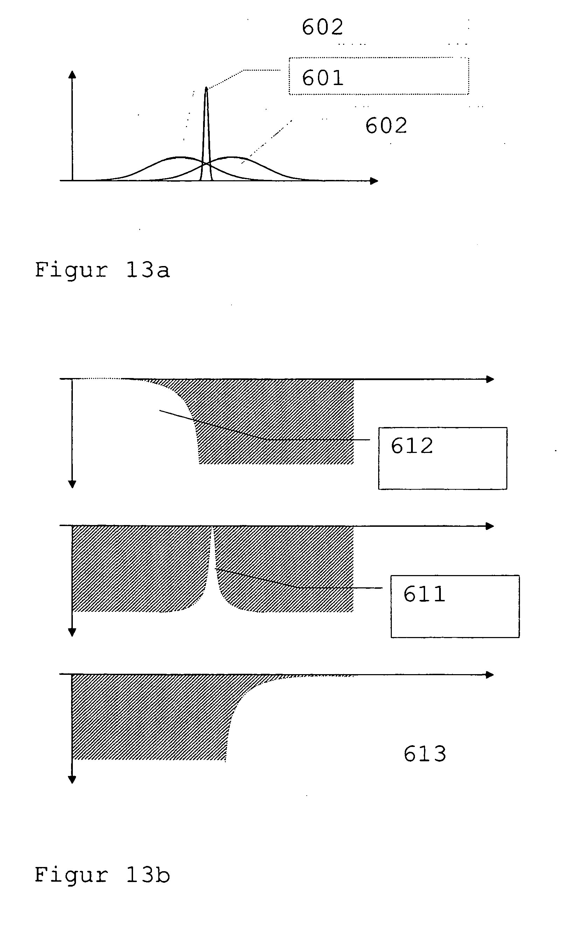

Ein entsprechendes Ausführungsbeispiel zeigen die Figuren 13a und 13b. In der Figur 13a stellen die Kurve 601 das Sendespektrum eines Lasers und die Kurven 602 die Sendespektren zweier Leuchtdioden dar. Das Filterspektrum (Durchlasscharakteristik) 611 zum Herausfiltern des Signals des Lasers und die Filterspektren 612 und 613 zum Herausfiltern der Signale der beiden Leuchtdioden sind in der Figur 13b gezeigt.

**Patentansprüche**

1. Schnittstellenbaustein (50, 80) mit

   - einer elektrischen Schnittstelle (40, 110) zum Anschluss an eine elektrische USB-Leitung (30, 100),
   - einer optischen Schnittstelle (60, 70) zum Anschluss an zumindest einen optischen Wellenleiter (90) zum Senden und Empfangen optischer Signale (S1', S2', S3', S4') und
   - einer Umwandlungseinrichtung (200), die geeignet ist, an der elektrischen Schnittstelle anliegende D$^+$- und D⁻-Signale als optische Signale an der optischen Schnittstelle auszugeben und an der optischen Schnittstelle anliegende optische Signale an der elektrischen Schnittstelle als D⁺- und D⁻-Signale auszugeben,

**dadurch gekennzeichnet,**

- **dass** die Umwandlungseinrichtung eine Auswerteinrichtung (210), eine Aufbereitungseinrichtung (220, 400) und zumindest zwei nachgeordnete Sendeeinrichtungen (240, 250, 410, 420, 430) aufweist, wobei die Auswerteinrichtung (210) die in den D⁺- und D⁻-Signalen enthaltenen Steuersignale (SS) und das Nutzsignal (NS) voneinander trennt,
- **dass** der Auswerteinrichtung die Aufbereitungseinrichtung (220, 400) nachgeordnet ist, die mit dem Nutzsignal (NS) und einzelnen oder allen der Steuersignale (SS) zumindest zwei elektrische Ansteuersignale (S1, S2, S11, S12, S13) für die nachgeordneten Sendeeinrichtungen (240, 250, 410, 420, 430) erzeugt, und
- **dass** die nachgeordneten Sendeeinrichtungen mit den zumindest zwei elektrischen Ansteuersignalen zumindest zwei optische Signale (S1', S2', S11', S12', S13') mit zumindest zwei unterschiedlichen Wellenlängenkanälen ($\lambda$1, $\lambda$2, $\lambda$3) erzeugen und an der optischen Schnittstelle ausgeben.

2. Schnittstellenbaustein nach Anspruch 1, **dadurch gekennzeichnet, dass** die Umwandlungseinrichtung (200) das Nutzsignal (NS) auf einem separaten, nutzsignaleignen Wellenlängenkanal (S1') überträgt.

3. Schnittstellenbaustein nach Anspruch 1 oder 2, **dadurch gekennzeichnet,**

- **dass** die Aufbereitungseinrichtung (400) zumindest zwei der Steuersignale miteinander unter Bildung eines elektrischen Ansteuersignals (S12, S13, S22) logisch verknüpft und
- **dass** eine nachgeordnete Sendeeinrichtung (420, 430) mit diesem Ansteuersignal ein optisches Signal (S12', S13', S22') mit einem eigenen Wellenlängenkanal ($\lambda$2, $\lambda$3) erzeugt und an der optischen Schnittstelle ausgibt.

4. Schnittstellenbaustein nach einem der voranstehenden Ansprüche, **dadurch gekennzeichnet,**

- **dass** die Aufbereitungseinrichtung (400) zumindest eines der Steuersignale mit dem Nutzsignal (NS) unter Bildung eines elektrischen Ansteuersignals (S21) logisch verknüpft und
- **dass** eine nachgeordnete Sendeeinrichtung (410) mit diesem Ansteuersignal ein optisches Signal (S21') mit einem eigenen Wellenlängenkanal ($\lambda$1) erzeugt und an der optischen Schnittstelle ausgibt.

5. Schnittstellenbaustein nach einem der voranstehenden Ansprüche, **dadurch gekennzeichnet, dass** die Wellenlängenkanäle ($\lambda$1, $\lambda$2, $\lambda$3) unterschiedliche Wellenlängenbereiche umfassen.

6. Schnittstellenbaustein nach einem der voranstehenden Ansprüche, **dadurch gekennzeichnet, dass** sich die Wellenlängenbereiche der Wellenlängenkanäle ($\lambda$1, $\lambda$2, $\lambda$3) überschneiden, aber unterschiedliche spektrale Kanalbreiten aufweisen.

7. Schnittstellenbaustein (50, 80) mit

- einer elektrischen Schnittstelle (40, 110) zum Anschluss an eine elektrische USB-Leitung (30, 100),
- einer optischen Schnittstelle (60, 70) zum Anschluss an zumindest einen optischen Wellenleiter (90) zum Senden und Empfangen optischer Signale (S1', S2', S3', S4') und
- einer Umwandlungseinrichtung (200), die geeignet ist, an der elektrischen Schnittstelle anliegende D⁺- und D⁻-Signale als optische Signale an der optischen Schnittstelle auszugeben und an der optischen Schnittstelle anliegende optische Signale an der elektrischen Schnittstelle als D⁺- und D⁻-Signale auszugeben,

**dadurch gekennzeichnet,**

- **dass** die Umwandlungseinrichtung (200) eine Aufbereitungseinrichtung (320, 440) aufweist, die geeignet ist, zumindest zwei optische Wellenlängenkanäle an der optischen Schnittstelle gleichzeitig zu empfangen und aus den zumindest zwei optischen Wellenlängenkanälen ein Nutzsignal (NS) und Steuersignale (SS) zu gewinnen, und
- **dass** die Umwandlungseinrichtung (200) auch eine Auswerteinrichtung (210) aufweist, die mit der Aufbereitungseinrichtung (320, 440) verbunden ist und mit den Steuersignalen (SS) und dem Nutzsignal (NS) die D⁺- und D⁻-Signale zur Ausgabe an der elektrischen Schnittstelle erzeugt.

8. Verfahren zum Übertragen eines USB-kompatiblen Signals, bei dem D⁺- und D⁻-Signale nach einer elektro-optischen Wandlung als optische Signale über zumindest einen optischen Wellenleiter (90) übertragen werden, **dadurch gekennzeichnet, dass** aus den elektrischen D⁺- und D⁻-Signalen Steuersignale (SS) und ein Nutzsignal (NS) abgeleitet werden und diese auf zumindest zwei optischen Wellenlängenkanälen über den zumindest einen optischen Wellenleiter (90) übertragen werden.

9. Verfahren nach Anspruch 8, **dadurch gekennzeichnet, dass** das Nutzsignal (NS) auf einem separaten, nutzsignaleignen Wellenlängenkanal (S1') übertragen wird.

10. Verfahren nach Anspruch 8 oder 9, **dadurch gekennzeichnet, dass** zumindest zwei der Steuersignale miteinander logisch verknüpft werden und das Verknüpfungssignal (S12, S13, S22) anschließend auf einem eigenen Wellenlängenkanal (S12', S13', S22') übertragen wird.

11. Verfahren nach einem der voranstehenden Ansprüche 8-10, **dadurch gekennzeichnet, dass** zumindest eines der Steuersignale mit dem Nutzsignal (NS) logisch verknüpft wird und das Verknüpfungssignal (S21) anschließend auf einem eigenen Wellenlängenkanal (S21') übertragen wird.

**Claims**

1. Interface unit (50, 80) with

   - an electrical interface (40, 110) for connection to a USB cable (30, 100),
   - an optical interface (60, 70) for connection to at least one optical waveguide (90) for sending and receiving of optical signals (S1', S2', S3', S4') and
   - a conversion unit (200), that is capable of converting the signals D+ and D- at the electrical interface to optical signals for output at the optical interface, and that is capable of converting the optical signals from the optical interface to electrical signals and output these signals as D+ and D- at the electrical interface.

   thus described

   - that the conversion unit has an analyzing unit (210), a recovery unit (220, 400), and at least two subsequent sending units (240, 250, 410, 420, 430), whereby the analyzing unit (210) separates the useful data (NS) and the control data (SS) contained in the signals D+ and D-,
   - that the analyzing units feeds the data to a recovery unit (220, 400) that generates at least two electrical driver signals (S1, S2, S11, S12, S13) based on the useful signal (NS) and single or all of the control signals (SS) for driving subsequent sending units (240, 250, 410, 420, 430), and
   - that subsequent sending units with at least two electrical driving signals generates at least two optical signals (S1', S2', S11', S12', S13') with at least two different wavelengths channels (λ1, λ2, λ3) and outputs these at the optical interface.

2. Interface unit according to claim 1, thus described, that the conversion unit (200) transfers the useful signal (NS) on a separate and dedicated wavelength channel (S1').

3. Interface unit according to claim 1 or claim 2, thus described,

   - that the recovery unit (400) logically combines at least two of the control signals to an electrical driver signal (S12, S13, S22) and
   - that a subsequent sending unit (420, 430) generates an optical signal (S12', S13', S22') with a dedicated wavelength channel (λ2, λ3) based on the driver signal and outputs it at the optical interface.

4. Interface unit according to aforementioned claims, thus described,

   - that the recovery unit (400) logically combines at least one of the control signals with the useful signal (NS) to an electrical driving signal (S21), and
   - that a subsequent sending unit generates an optical signal (S21') with a dedicated wavelength channel (λ1) based on the driver signal and outputs it at the optical interface.

5. Interface unit according to the aforementioned claims, thus described, that the wavelength channels ($\lambda 1$, $\lambda 2$, $\lambda 3$) have different wavelength ranges.

6. Interface unit according to the aforementioned claims thus described, that the wavelength ranges of the wavelength channels ($\lambda 1$, $\lambda 2$, $\lambda 3$) overlap but still have different spectral widths.

7. Interface unit 50, 80) with

- an electrical interface (40, 110) for connection to a USB cable (30,100),
- an optical interface (60, 70) for connection to at least one optical waveguide (90) for sending and receiving optical signals (S1', 32', S3', S4'), and
- a conversion unit (200) that is capable of outputing the D+ and D- signal from the electrical interface as optical signals at the optical interface and is capable of outputing the optical signals from the optical interface as electrical signals D+ and D- at the electrical interface.

thus described, that

- the conversion unit (200) contains a recovery unit (320, 440) that is capable of simultaneously receiving at least two optical wavelength channels at the optical interface and converting these at least two optical wavelength channels to a useful signal (NS) and control signals (SS), and
- the conversion unit (200) also comprises an analyzing unit (210), which is connected to the recovery unit (320, 440) and generates the signal D+ and D- out of the control signals (SS) and the useful signal (NS) for output at the electrical interface.

8. Method for transmission of a USB compatible signal where the signals D+ and D- after electro-optical conversion are transferred as optical signals over at least one optical waveguide (90)
thus described, that
a useful signal (NS) and control signals (SS) are derived from the electrical D+ and D- signals and are transferred on at least two different wavelength channels on at least one optical waveguide (90)

9. Method according to claim 7, thus described, that the useful signal (NS) is transferred on a separate and dedicated wavelength channel (S1')

10. Method according to claim 7, 8 or 9 thus described, that at least two control signals are logically combined and that the combined signal (S12, S13, S22) is then transferred on a separate and dedicated wavelength channel (S12', S13', S22).

11. Method according to claims 7-10, thus described, that at least one of the control signals is logically combined with the useful signal (NS) and that the combined signal (S21) then is transferred on a separate and dedicated wavelength channel (S21').

**Revendications**

1. Composant d'interface (50, 80) comprenant

- une interface électrique (40, 110) destinée à être raccordée à une ligne USB (30, 100) électrique,
- une interface optique (60, 70) destinée à être raccordée à au moins un guide d'onde optique (90) pour envoyer et recevoir des signaux optiques (S1', S2', S3', S4') et
- un dispositif de conversion (200) qui est conçu pour délivrer les signaux D+ et D- appliqués sur l'interface électrique sous la forme de signaux optiques à l'interface optique et pour délivrer les signaux optiques appliqués sur l'interface optique sous la forme de signaux D+ et D- à l'interface électrique, **caractérisé en ce**
- **que** le dispositif de conversion présente un dispositif d'interprétation (210), un dispositif de conditionnement (220, 400) et au moins deux dispositifs d'émission (240, 250, 410, 420, 430) disposés à la suite, le dispositif d'interprétation (210) séparant les uns des autres les signaux de commande (SS) et le signal utile (NS) contenus dans les signaux D+ et D-,
- **que** le dispositif de conditionnement (220, 400) est disposé à la suite du dispositif d'interprétation et génère, avec le signal utile (NS) et quelques-uns ou la totalité des signaux de commande (SS) au moins deux signaux d'excitation (S1, S2, S11, S12, S13) électriques pour les dispositifs d'émission (240, 250, 410, 420, 430) disposés à la suite, et

- **que** les dispositifs d'émission disposés à la suite génèrent avec les au moins deux signaux d'excitation électriques au moins deux signaux optiques (S1', S2', S11', S12', S13') ayant au moins deux canaux de longueur d'onde ($\lambda$1, $\lambda$2, $\lambda$3) différents et les délivrent à l'interface optique.

2. Composant d'interface selon la revendication 1, **caractérisé en ce que** le dispositif de conversion (200) transmet le signal utile (NS) sur un canal de longueur d'onde (S1') séparé, propre au signal utile.

3. Composant d'interface selon la revendication 1 ou 2, **caractérisé en ce**

- **que** le dispositif de conditionnement (400) combine logiquement entre eux au moins deux des signaux de commande en formant un signal d'excitation électrique (S12, S13, S22) et
- **qu'**un dispositif d'émission (420, 430) disposé à la suite génère avec ce signal d'excitation un signal optique (S12', S13', S22') ayant un canal de longueur d'onde propre ($\lambda$2, $\lambda$3) et le délivre à l'interface optique.

4. Composant d'interface selon l'une des revendications précédentes, **caractérisé en ce**

- **que** le dispositif de conditionnement (400) combine logiquement au moins l'un des signaux de commande avec le signal utile (NS) en formant un signal d'excitation électrique (S21) et
- **qu'**un dispositif d'émission (410) disposé à la suite génère avec ce signal d'excitation un signal optique (S21') ayant un canal de longueur d'onde propre ($\lambda$1) et le délivre à l'interface optique.

5. Composant d'interface selon l'une des revendications précédentes, **caractérisé en ce que** les canaux de longueur d'onde ($\lambda$1, $\lambda$2, $\lambda$3) englobent des plages de longueurs d'onde différentes.

6. Composant d'interface selon l'une des revendications précédentes, **caractérisé en ce que** les plages de longueurs d'onde des canaux de longueur d'onde ($\lambda$1, $\lambda$2, $\lambda$3) s'entrecoupent, mais présentent des largeurs de canal spectrales différentes.

7. Composant d'interface (50, 80) comprenant

- une interface électrique (40, 110) destinée à être raccordée à une ligne USB (30, 100) électrique,
- une interface optique (60, 70) destinée à être raccordée à au moins un guide d'onde optique (90) pour envoyer et recevoir des signaux optiques (S1, S2', S3', S4') et
- un dispositif de conversion (200) qui est conçu pour délivrer les signaux D+ et D- appliqués sur l'interface électrique sous la forme de signaux optiques à l'interface optique et pour délivrer les signaux optiques appliqués sur l'interface optique sous la forme de signaux D+ et D- à l'interface électrique, **caractérisé en ce**
- **que** le dispositif de conversion (200) présente un dispositif de conditionnement (320, 440) qui est conçu pour recevoir simultanément sur l'interface optique au moins deux canaux de longueur d'onde optiques et pour obtenir un signal utile (NS) et des signaux de commande (SS) à partir des au moins deux canaux de longueur d'onde optiques, et
- **que** le dispositif de conversion (200) présente également un dispositif d'interprétation (210) qui est relié avec le dispositif de conditionnement (320, 440) et qui génère, avec les signaux de commande (SS) et le signal utile (NS), les signaux D+ et D- en vue de les délivrer sur l'interface électrique.

8. Procédé de transmission d'un signal compatible USB, selon lequel des signaux D+ et D- sont transmis après une conversion électro-optique sous la forme de signaux optiques par le biais d'au moins un guide d'onde optique (90), **caractérisé en ce que**

des signaux de commande (SS) et un signal utile (NS) sont dérivés des signaux D+ et D- et ceux-ci sont transmis sur au moins deux canaux de longueurs d'onde optiques par le biais de l'au moins un guide d'onde optique (90).

9. Procédé selon la revendication 8, **caractérisé en ce que** le signal utile (NS) est transmis sur un canal de longueur d'onde (S1') séparé, propre au signal utile.

10. Procédé selon la revendication 8 ou 9, **caractérisé en ce qu'**au moins deux des signaux de commande sont combinés logiquement entre eux et le signal combiné (S12, S13, S22) est ensuite transmis sur un canal de longueur d'onde (S12', S13', S22') propre.

11. Procédé selon l'une des revendications précédentes 8 à 10, **caractérisé en ce qu'**au moins l'un des signaux de commande est combiné logiquement avec le signal utile (NS) et le signal combiné (S21) est ensuite transmis sur un canal de longueur d'onde (S21') propre.

EP 1 971 049 B1

Figur 1

Figur 2

Figur 3

EP 1 971 049 B1

Figur 4

Figur 5

Figur 6

EP 1 971 049 B1

Figur 7

EP 1 971 049 B1

Figur 8

EP 1 971 049 B1

Figur 9

Figur 10

Figur 11a

Figur 11b

Figur 12

EP 1 971 049 B1

602

601

602

Figur 13a

612

611

613

Figur 13b

**EP 1 971 049 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0152454 A
- US 6950610 B